# EUROPEAN PATENT APPLICATION

(11) **EP 4 745 729 A1**
(43) Date of publication of application: **20.05.2026**
(21) Application number: 24856374.4
(22) Date of filing: 13.08.2024
(51) Int. Cl.: G06F 3/0338

(54) **INPUT DEVICE**

(30) Priority: 23.08.2023 JP 2023135592
(71) Applicant: Sony Interactive Entertainment Inc., Tokyo 108-0075 (JP)
(72) Inventor: IGARASHI, Takeshi, Tokyo 108-0075 (JP); OTA, Masataka, Tokyo 108-0075 (JP)
(74) Representative: Fish & Richardson P.C.
(86) International application number: PCT/JP2024/028924
(87) International publication number: WO 2025/041683

(57) **Abstract**

A corresponding relationship between a tilt direction of an operation stick and an instruction direction to an application is easily recognized from the external appearance of an input device. The input device (1) may have a top member (40) having an upper surface, which may be touched by a finger of a user, and a base member (50) to which the top member (40) is attached. One among the base member (50) and an insertion portion (42) of the top member (40) may have a plurality of engaging portions (70) surrounding an axis (L1) of the insertion portion (42), and the other may have at least one engaging portion (80) that engages with at least one of the plurality of the engaging portion (70) and restricts movement of the insertion portion (42) in a circumferential direction of the axis (L1). A mark (45) indicating a direction that intersects the axis (L1) may be formed on an outer surface of the top member (40).

## Description

### [Technical Field]

The present disclosure relates to an input device.

### [Background Art]

Patent Literature 1 below discloses an input device used to operate an application, such as a game or the like. The input device taught in Patent Literature 1 below has an operation stick. A user is able to operate the operation stick while holding the input device in both hands. Furthermore, Patent Literature 2 below discloses an input device that may be used while placed on the floor or a desk, on a thigh of the user, or the like. The input device taught in Patent Literature 2 below has a portion where a plurality of operation buttons is disposed and a portion where the operation stick is disposed.

### [Citation List]

### [Patent Literature]

[Patent Literature 1] International Publication No. WO 2019/244995
[Patent Literature 2] US Patent Application Publication No. 2023/0147235 Specification

### [Summary of Invention]

### [Problem to Be Solved by Invention]

The way in which a user holds the input device taught in Patent Literature 1 when using it (in other words, the orientation of the input device) is predetermined. Therefore, a corresponding relationship between a tilt direction of the operation stick and an instruction direction to the application does not change. For example, tilting the operation stick forward means instructing the application to move in an upward or forward direction (in one example, instructing an object to move forward within a game space), and tilting the operation stick to the right means instructing the application to move in the right direction (in one example, instructing an object to move to the right within the game space). When the input device taught in Patent Literature 1 is used, this kind of corresponding relationship does not change.

In contrast thereto, the orientation of the input device taught in Patent Literature 2 above may be freely changed by the user. For example, a portion of the input device where the operation stick is disposed may be disposed on the right-hand side of the user, or conversely, the portion where the operation stick is disposed may be disposed on the left-hand side of the user. Therefore, it is desirable that the corresponding relationship between the tilt direction of the operation stick and the instruction direction to the application is able to be changed according to the orientation of the input device. However, if this kind of change in the corresponding relationship is made possible, a problem arises in that it becomes difficult for the user to recognize the current corresponding relationship from the external appearance of the input device.

An object of the present invention is to make the corresponding relationship between the tilt direction of the operation stick and the instruction direction to the application to be easily recognized from the external appearance of the input device.

### [Means for Solving Problem]

An input device according to the present disclosure may have an operation stick having a top member having an upper surface, which may be touched by a finger of a user, and a base member to which the top member is attached. The top member may have an insertion portion extending downward and inserted into the base member. One among the base member and the insertion portion may have a plurality of first engaging portions surrounding an axis of the insertion portion, and the other may have at least one second engaging portion that engages with at least one among the plurality of first engaging portions and restricts movement of the insertion portion in a circumferential direction of the axis. A mark that indicates a direction intersecting the axis may be formed on an outer surface of the top member. Accordingly, a corresponding relationship between a tilt direction of the operation stick and an instruction direction to an application may be easily recognized from the external appearance of the input device.

### [Brief Description of Drawings]

[FIG. 1] A perspective view of an input device according to an embodiment of the present disclosure.
[FIG. 2] A front view illustrating the constituent elements of an operation stick.
[FIG. 3] A cross-sectional view of the constituent elements of the operation stick obtained in a cross section along line III-III in FIG. 2.
[FIG. 4] A perspective view illustrating an upper side of a top member.
[FIG. 5] A perspective view illustrating a lower side of the top member.
[FIG. 6] A plan view of a base member.
[FIG. 7] A perspective view of the base member cut at a surface along the line VII-VII in FIG. 6.
[FIG. 8] An enlarged view of one portion of FIG. 3, illustrating an engaging portion of the top member.
[FIG. 9] A front view of an engaging portion of the base member illustrated in FIG. 8.
[FIG. 10] A diagram showing one example of a configuration of hardware installed in the input device.
[FIG. 11] A functional block diagram showing one example of functions implemented by the input device (input system).

### [Description of Embodiments]

Hereinafter, an input device 1, which is one example of the input device proposed in the present disclosure, will be described with reference to drawings. The input device 1 may be used as an input device for an information processing device (for example, a game device or a video playback device) that has a function for executing an application (for example, a game application). The input device 1 is capable of wired or wireless communication with the information processing device, and transmits to the information processing device a signal corresponding to an operation performed on the input device 1 by a user.

### [1. Summary of input device]

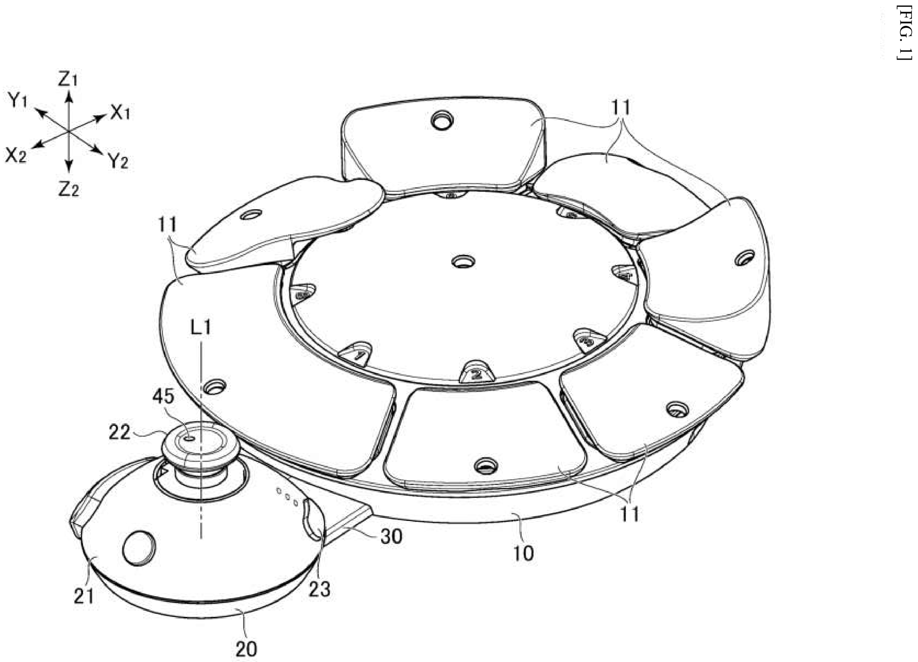

FIG. 1 is a perspective view of the input device 1. In the following description, an X1 direction and an X2 direction of an X-axis (direction in which a first unit 10 and a second unit 20, to be described later, are aligned) illustrated in FIG. 1 or the like are defined as the right direction and the left direction, respectively. Furthermore, a Y1 direction and a Y2 direction of a Y-axis perpendicular to the X-axis are defined as forward and backward, respectively. Furthermore, a Z1 direction and a Z2 direction of a Z-axis perpendicular to the X-axis and the Y-axis (extending direction of an operation stick 22, to be described later) are defined as an upward direction and a downward direction, respectively. However, these directions and disposal positions are defined to describe the shapes or relative positional relationships of the elements (components, members, and parts) of the input device 1, and do not limit the orientation of the input device 1.

The input device 1 may be disposed, for example, on an upper surface of a desk, an upper surface of an armrest of a chair, or an upper surface of a thigh of the user. As illustrated in FIG. 1, the input device 1 may have a first unit 10 that is a main body thereof, and a second unit 20 connected thereto. The second unit 20 may be disposed next to the first unit 10 in a direction perpendicular to an up-down direction (for example, a left-right direction). A connecting portion 30 extending in the left-right direction (first direction) and connected to the first unit 10 may be secured to the second unit 20.

As illustrated in FIG. 1, a plurality of operation buttons 11 (seven in the example illustrated in FIG. 1) may be disposed on an upper surface of the first unit 10. Note that the number of operation buttons 11 disposed on the first unit 10 may be one, or may be a plurality other than seven. In addition to the operation button 11 or instead of the operation button 11, the first unit 10 may have an operation member such as an operation stick, a touch panel, or the like.

As illustrated in FIG. 1, the second unit 20 may have a dome-shaped cover member 21 that bulges in the upward direction as a whole, and the operation stick 22. The operation stick 22 may be disposed at a center portion of the second unit 20 and may pass through a hole formed at a top portion of the cover member 21. Furthermore, the second unit 20 may have a profile button 23, to be described later. The second unit 20 may have a different operation button than the profile button 23.

### [2. Structure of operation stick]

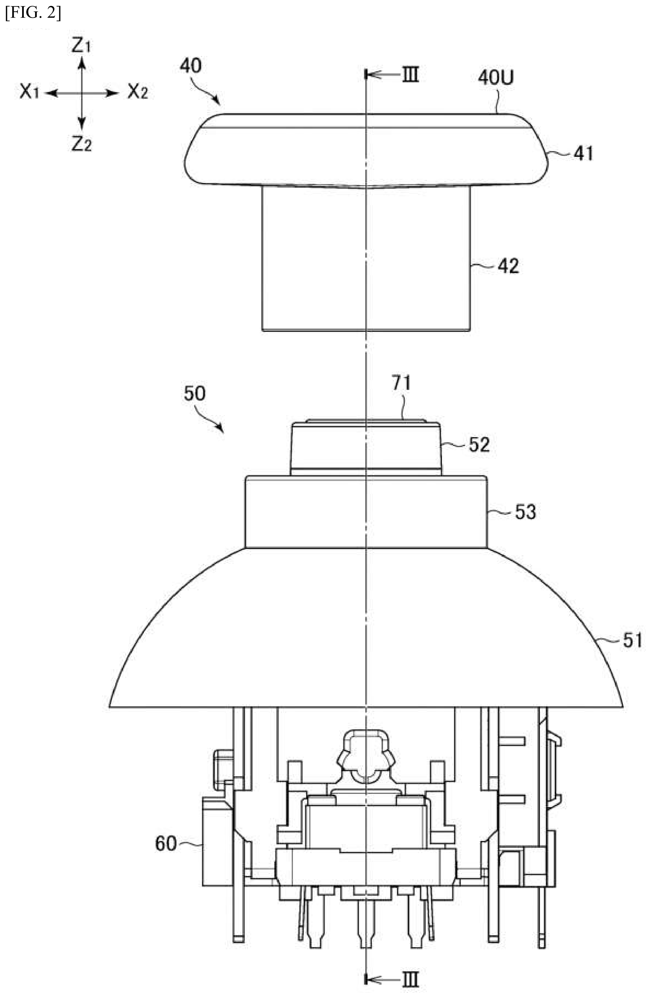

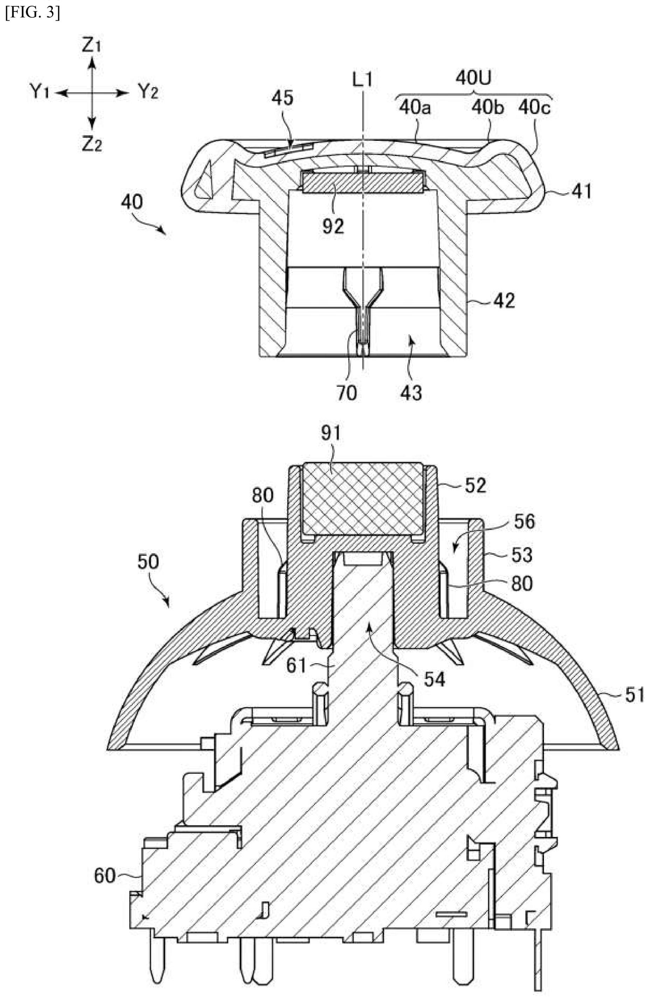

FIG. 2 is a front view illustrating the constituent elements of the operation stick 22. FIG. 3 is a cross-sectional view of the constituent elements of the operation stick 22 obtained in a cross section along line III-III in FIG. 2. As illustrated in FIG. 2, the operation stick 22 may have a top member 40 having an upper surface 40U, which may be touched by a finger of the user, and a base member 50 to which the top member 40 is attached. The operation stick 22 may have a support member 60 to which the base member 50 is attached and that supports the base member 50. In the example illustrated in FIG. 3, the support member 60 has a support convex portion 61 that protrudes upward. The support convex portion 61 may be inclined with respect to a center line along the up-down direction. The support member 60 may have a sensor that detects an angle of inclination of the support convex portion 61. The support member 60 may have a sensor that detects the angle of inclination of the support convex portion 61 in a front-rear direction, and a sensor that detects the angle of inclination of the support convex portion 61 in the left-right direction.

In the example illustrated in FIG. 3, the base member 50 has a dome-shaped cover portion 51, a column portion 52 stretching in the up-down direction, and a cylindrical circumferential wall portion 53 surrounding an outer circumferential surface of the column portion 52. Furthermore, a concave portion 54 recessed upward is formed on a bottom surface of the column portion 52. The support convex portion 61 stretching upward on the support member 60 is inserted into this concave portion 54. As a result, the base member 50 including the column portion 52 is supported by the support convex portion 61.

As illustrated in FIG. 3, the top member 40 may have a disk-shaped top portion 41 including the upper surface 40U. Furthermore, the top member 40 may have an insertion portion 42 extending downward from the top portion 41 and inserted into the base member 50. This allows the top member 40 to be attached to the base member 50. In the example illustrated in FIG. 3, the insertion portion 42 may be inserted into a space 56 between the column portion 52 and the circumferential wall portion 53 of the base member 50. Furthermore, in the example illustrated in FIG. 3, the insertion portion 42 is formed in a cylindrical shape and has a concave portion 43 that opens downward. The top member 40 is attached to the base member 50 by fitting the column portion 52 of the base member 50 into the concave portion 43.

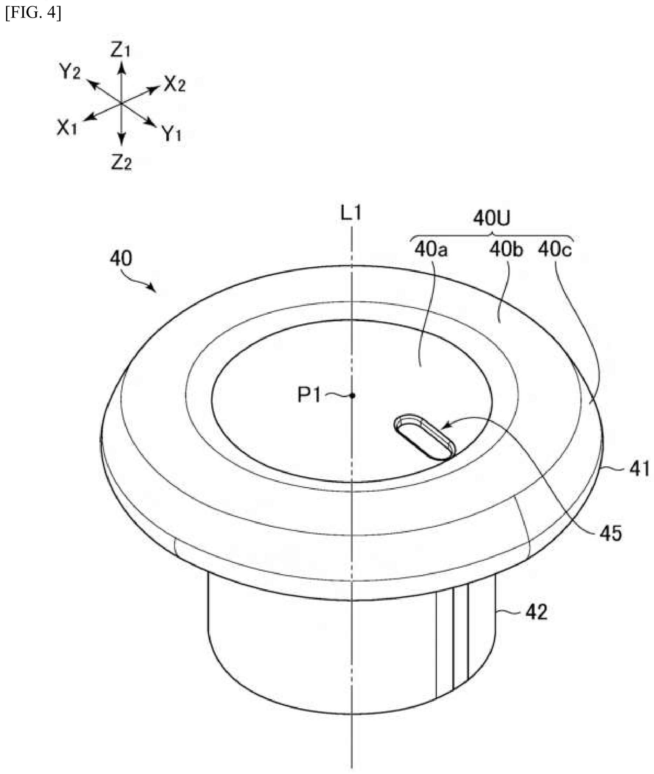

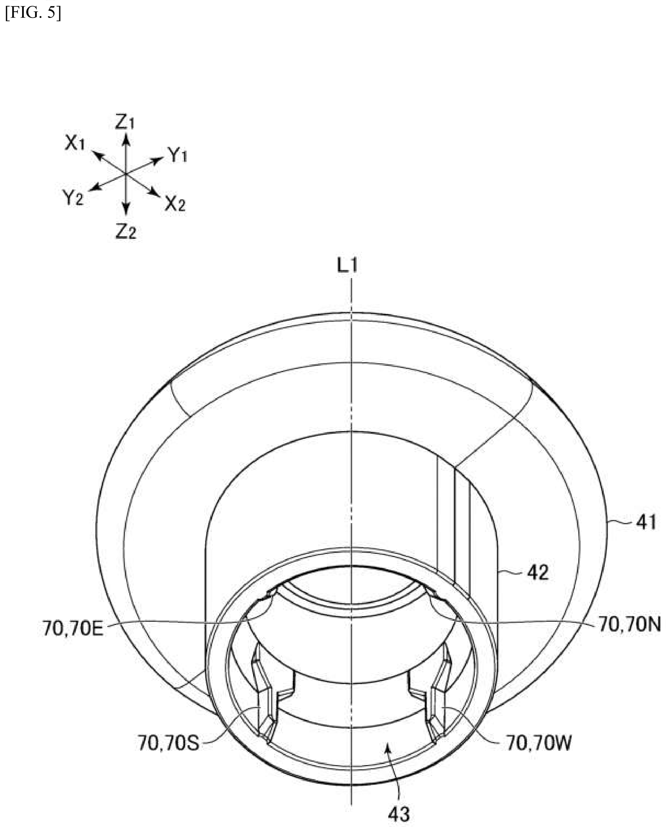

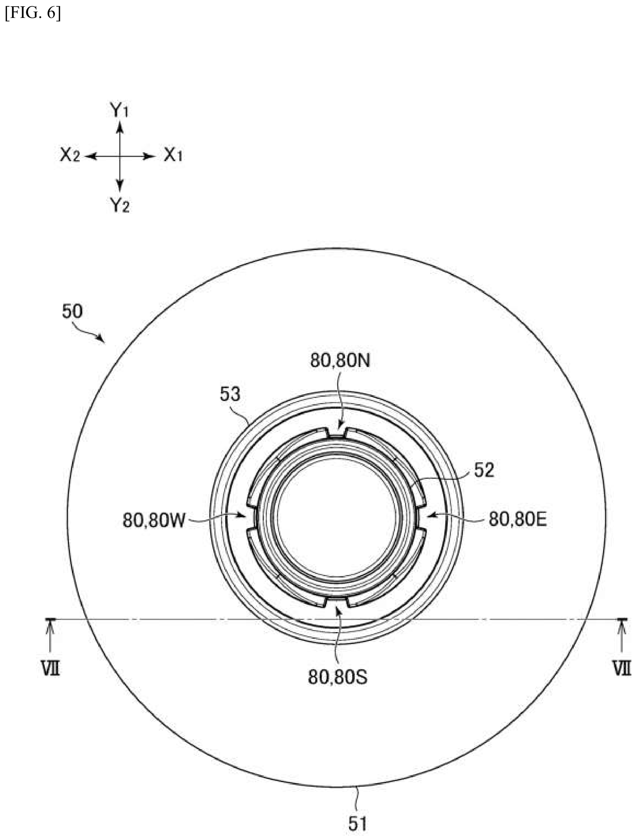

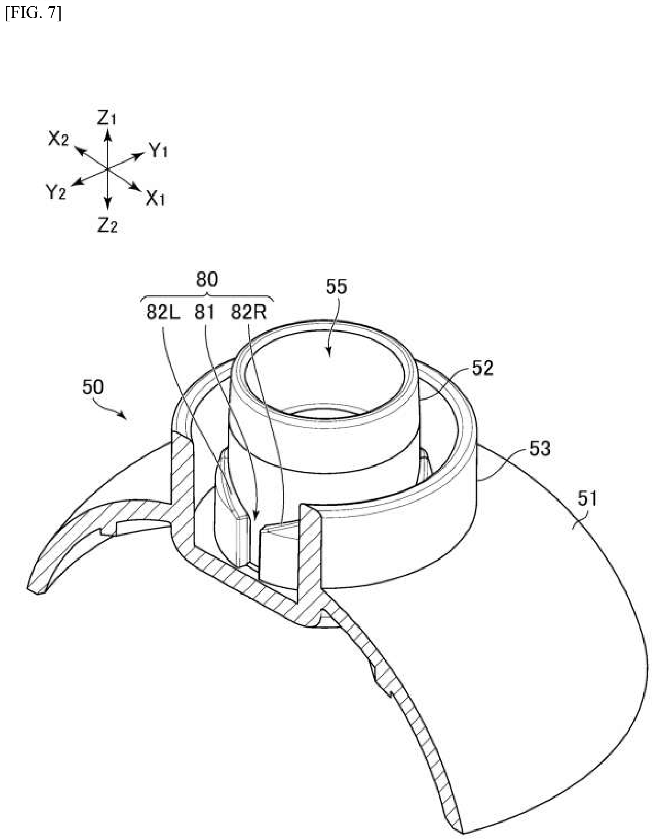

FIG. 4 is a perspective view illustrating an upper side of the top member 40. FIG. 5 is a perspective view illustrating a lower side of the top member 40. FIG. 6 is a plan view of the base member 50. FIG. 7 is a perspective view of the base member 50 cut at a surface along the line VII-VII in FIG. 6.

One among the base member 50 and the insertion portion 42 of the top member 40 may have a plurality of first engaging portions (for example, a plurality of engaging portions 70 or a plurality of engaging portions 80, to be described later) surrounding an axis L1 of the insertion portion 42 extending in the up-down direction. Furthermore, the other among the base member 50 and the insertion portion 42 of the top member 40 may have at least one second engaging portion (for example, the plurality of engaging portions 70 or the plurality of engaging portions 80, to be described later) that engages with at least one among the plurality of first engaging portions and restricts movement of the insertion portion 42 in a circumferential direction of the axis L1.

In the present embodiment, as illustrated in FIG. 5, the insertion portion 42 of the top member 40 has the plurality of engaging portions 70. the plurality of engaging portions 70 may be formed on an inner circumferential surface of the cylindrical insertion portion 42. Furthermore, in the present embodiment, as illustrated in FIG. 6, the base member 50 has the plurality of engaging portions 80. As illustrated in FIG. 7, the engaging portion 80 may be formed on the column portion 52 extending in the up-down direction (Z-axis direction in FIG. 7) on the base member 50.
the plurality of engaging portions 70 provided on the top member 40 is one example of the "first engaging portion", and the plurality of engaging portions 80 provided on the base member 50 is one example of the "second engaging portion". In this case, the number of engaging portions 80 provided on the base member 50 may be one. Furthermore, the plurality of engaging portions 70 is also one example of the "second engaging portion", and the plurality of engaging portions 80 is also one example of the "first engaging portion". In this case, the number of engaging portions 70 provided on the top member 40 may be one.
the plurality of engaging portions 70 provided on the top member 40 may have the same shape. Similarly, the plurality of engaging portions 80 provided on the base member 50 may have the same shape. Each engaging portion 70 provided on the top member 40 may have a shape corresponding to each engaging portion 80 provided on the base member 50. Thus, each engaging portion 70 provided on the top member 40 may be fitted to any of the plurality of engaging portions 80 provided on the base member 50. Furthermore, each engaging portion 80 provided on the base member 50 may be fitted to any of the plurality of engaging portions 70 provided on the top member 40.

As illustrated in FIG. 4, a mark 45 that indicates a direction intersecting the axis L1 of the insertion portion 42 may be formed on an outer surface of the top member 40. In the example illustrated in FIG. 4, the mark 45 is formed at a position separated from the axis L1 in a direction intersecting the axis L1 (for example, the Y1 direction in FIG. 4). This allows the mark 45 to indicate the direction intersecting the axis L1.

In the example illustrated in FIG. 4, the mark 45 is formed on the upper surface 40U of the top member 40. The mark 45 is formed at a position separated from a point of intersection P1 between the axis L1 and the upper surface 40U of the top member 40 in a direction intersecting the axis L1 (for example, the Y1 direction in FIG. 4). As illustrated in FIG. 3 and FIG. 4, the upper surface 40U of the top member 40 may have a central portion 40a that includes the point of intersection P1 with the axis L1 and slightly bulges in a dome-shaped manner, an inner circumferential portion 40b that surrounds the central portion 40a in the circumferential direction of the axis L1 and faces upward, and an outer circumferential portion 40c that surrounds the inner circumferential portion 40b in the circumferential direction of the axis L1 and faces upward in an oblique direction and in a direction away from the axis L1. In the example illustrated in FIG. 3 and FIG. 4, the mark 45 is formed on the central portion 40a. Not limited thereto, the mark 45 may be formed on the inner circumferential portion 40b or may be formed on the outer circumferential portion 40c. Furthermore, in the example illustrated in FIG. 3 and FIG. 4, the mark 45 is a concave portion that is recessed downward from the upper surface 40U. Not limited thereto, the mark 45 may be a convex portion protruding from the upper surface 40U. Furthermore, the mark 45 may take the shape of an arrow or the like that indicates a direction intersecting the axis L1.

As described above, the plurality of first engaging portions (for example, the plurality of engaging portions 70 formed on the top member 40) formed on one among the top member 40 and the base member 50 may engage with at least one second engaging portion (for example, the plurality of engaging portions 80 formed on the base member 50) formed on the other. This allows the mark 45 to indicate a plurality of directions intersecting the axis L1. For example, the mark 45 may indicate forward (Y1 direction in FIG. 1 and FIG. 4) with respect to the axis L1, or conversely, backward (Y2 direction in FIG. 1 and FIG. 4) with respect to the axis L1.

In the input device 1 illustrated in FIG. 1, a corresponding relationship between a tilt direction of the operation stick 22 and an instruction direction to the application (for example, a movement direction of an object in a game space) may be changed according to the orientation of the input device 1. This may make it possible to dispose the second unit 20 on which the operation stick 22 is disposed on the right-hand side of the user, or to dispose the second unit 20 on the left-hand side of the user. Here, the top member 40 may be attached to the base member 50 so that the mark 45 indicates forward (Y1 direction in FIG. 1) relative to the axis L1 of the operation stick 22 (on the top member 40, axis L1 of the insertion portion 42 extending in the up-down direction), or may be attached to the base member 50 so that the mark 45 indicates backward (Y2 direction in FIG. 1) relative to the axis L1. Thus, the corresponding relationship between the tilt direction of the operation stick 22 and the instruction direction to the application may be easily recognized from the external appearance of the input device 1.
the plurality of first engaging portions provided on one among the insertion portion 42 of the top member 40 and the base member 50 may include the first engaging portion positioned in the first direction (for example, forward) with respect to the axis L1 of the insertion portion 42, and the first engaging portion positioned in a second direction (for example, backward) opposite to the first direction with respect to the axis L1. In the example illustrated in FIG. 5, the plurality of engaging portions 70 formed on the insertion portion 42 of the top member 40 includes an engaging portion 70N positioned forward (Y1 direction in FIG. 5) with respect to the axis L1, and an engaging portion 70S positioned backward (Y2 direction in FIG. 5) with respect to the axis L1. Furthermore, in the example illustrated in FIG. 6, the plurality of engaging portions 80 formed on the base member 50 includes an engaging portion 80N positioned forward (Y1 direction in FIG. 6) with respect to the axis L1, and an engaging portion 80S positioned backward (Y2 direction in FIG. 6) with respect to the axis L1.

As illustrated in FIG. 4, the mark 45 formed on the top member 40 may be positioned forward (Y1 direction in FIG. 4) with respect to the axis L1 of the insertion portion 42, similar to the engaging portion 70N formed on the top member 40 and the engaging portion 80N formed on the base member 50. As will be described below, the user may attach the top member 40 to the base member 50 so that the direction indicated by the mark 45 is a forward or upward instruction direction to the application.

For example, when setting the corresponding relationship between the tilt direction of the operation stick 22 and the instruction direction to the application so that the second unit 20 on which the operation stick 22 is disposed is disposed on the left-hand side of the user, the user may engage the engaging portion 70N (see FIG. 5) of the top member 40 with the engaging portion 80N (see FIG. 6) of the base member 50, and may also engage the engaging portion 70S (see FIG. 5) of the top member 40 with the engaging portion 80S (see FIG. 6) of the base member 50. This allows the top member 40 to be attached to the base member 50 so that the mark 45 indicates forward (Y1 direction in FIG. 1) with respect to the axis L1 of the operation stick 22. Furthermore, when the corresponding relationship between the tilt direction of the operation stick 22 and the instruction direction to the application is set so that the second unit 20 on which the operation stick 22 is disposed is disposed on the right-hand side of the user, the user may engage the engaging portion 70N (see FIG. 5) of the top member 40 with the engaging portion 80S (see FIG. 6) of the base member 50, and may also engage the engaging portion 70S (see FIG. 5) of the top member 40 with the engaging portion 80N (see FIG. 6) of the base member 50. This allows the top member 40 to be attached to the base member 50 so that the mark 45 indicates backward (Y2 direction in FIG. 1) with respect to the axis L1 of the operation stick 22. The user is then able to easily recognize the corresponding relationship between the tilt direction of the operation stick 22 and the instruction direction to the application from the external appearance of the input device 1 disposed in a plurality of orientations.

Furthermore, the plurality of first engaging portions provided on one among the base member 50 and the insertion portion 42 of the top member 40 may further include the first engaging portion positioned in a third direction (for example, the right direction or the left direction) intersecting the second direction (for example, backward) and the first direction (for example, forward) with respect to the axis L1 of the insertion portion 42. In the example illustrated in FIG. 5, the plurality of engaging portions 70 formed on the insertion portion 42 of the top member 40 includes an engaging portion 70E positioned in the right direction (X1 direction in FIG. 5) with respect to the axis L1, and an engaging portion 70W positioned in the left direction (X2 direction in FIG. 5) with respect to the axis L1. Furthermore, in the example illustrated in FIG. 6, the plurality of engaging portions 80 formed on the base member 50 includes an engaging portion 80E positioned in the right direction (X1 direction in FIG. 6) with respect to the axis L1, and an engaging portion 80W positioned backward (Y2 direction in FIG. 6) with respect to the axis L1.

For example, when setting the corresponding relationship between the tilt direction of the operation stick 22 and the instruction direction to the application so that the second unit 20 on which the operation stick 22 is disposed is disposed on a front side of the user, the user may engage the engaging portion 70N (see FIG. 5) of the top member 40 with the engaging portion 80E (see FIG. 6) of the base member 50. This allows the top member 40 to be attached to the base member 50 so that the mark 45 indicates the right direction (X1 direction in FIG. 1) with respect to the axis L1 of the operation stick 22. Furthermore, when setting the corresponding relationship between the tilt direction of the operation stick 22 and the instruction direction to the application so that the second unit 20 on which the operation stick 22 is disposed is disposed on a back side of the user, the user may engage the engaging portion 70N of the top member 40 with the engaging portion 80W of the base member 50. This allows the top member 40 to be attached to the base member 50 so that the mark 45 indicates the left direction (X2 direction in FIG. 1) with respect to the axis L1 of the operation stick 22. The user is then able to easily recognize the corresponding relationship between the tilt direction of the operation stick 22 and the instruction direction to the application from the external appearance of the input device 1 disposed in various orientations.

Furthermore, one among the plurality of first engaging portions and the at least one second engaging portion (for example, one among the plurality of engaging portions 70 formed on the top member 40 and the plurality of engaging portions 80 formed on the base member 50) may include a convex portion extending along the extending direction of the insertion portion 42 of the top member 40. Furthermore, the other among the plurality of first engaging portions and the at least one second engaging portion may include a groove portion extending along the extending direction of the insertion portion 42.

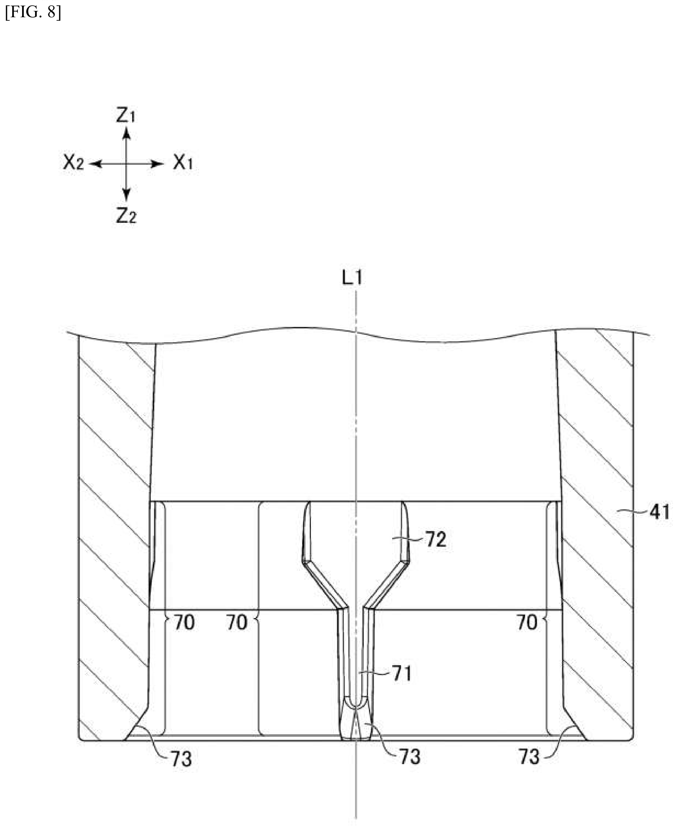

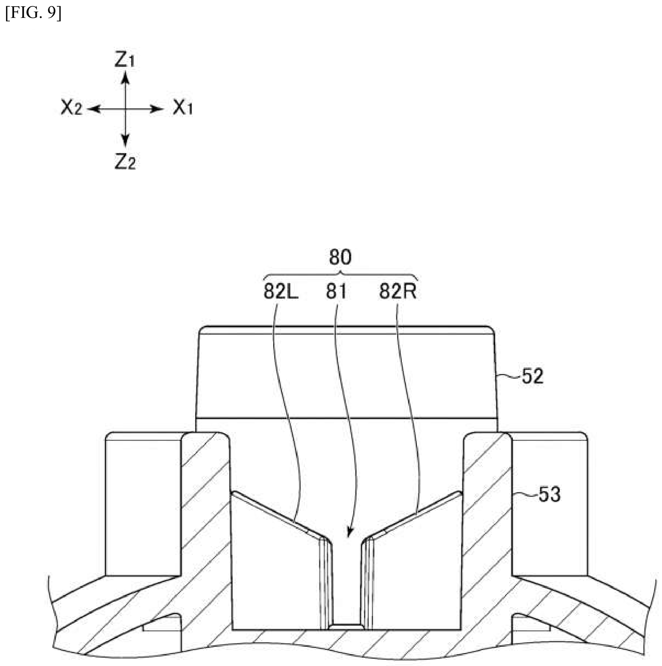

FIG. 8 is an enlarged view of one portion of FIG. 3, illustrating the engaging portion 70 of the top member 40. FIG. 9 is a front view of the engaging portion 80 of the base member 50 illustrated in FIG. 8. In the present embodiment, as illustrated in FIG. 8, each engaging portion 70 formed on the top member 40 has a convex portion 71 that protrudes from the inner circumferential surface of the cylindrical insertion portion 42 and extends along the extending direction of the insertion portion 42. Furthermore, as illustrated in FIG. 7 and FIG. 9, each engaging portion 80 formed on the base member 50 includes a groove portion 81 that is formed on the outer circumferential surface of the column portion 52 and extends along the extending direction of the insertion portion 42.

Furthermore, one among the plurality of first engaging portions and the at least one second engaging portion (for example, one among the plurality of engaging portions 70 formed on the top member 40 and the plurality of engaging portions 80 formed on the base member 50) may include a guide slope that is inclined in an oblique direction from an end portion of the groove portion, into which the convex portion formed on the other fits, in the circumferential direction of the insertion portion 42 and the extending direction of the insertion portion 42.

In the present embodiment, as illustrated in FIG. 7 and FIG. 9, the engaging portion 80 is formed with a guide slope 82L extending in an oblique direction upward from a left edge of an upper end portion of the groove portion 81 and in the circumferential direction of the column portion 52 (the circumferential direction of the insertion portion 42, clockwise direction), and a guide slope 82R extending in an oblique direction upward from a right edge of the upper end portion of the groove portion 81 and in the circumferential direction of the column portion 52 (the circumferential direction of the insertion portion 42, counterclockwise direction). When the top member 40 is attached to the base member 50, the top member 40 moves downward (Z2 direction in FIG. 9) due to gravity, and a lower end portion 73 (see FIG. 8) of the convex portion 71 of the top member 40 makes contact with the guide slope 82L or the guide slope 82R, which may thereby guide the convex portion 71 inside the groove portion 81.

As illustrated in FIG. 8, a stopper portion 72 protruding from the inner circumferential surface of the insertion portion 42 may be formed on an upper side of the convex portion 71 of the engaging portion 70. A width of the stopper portion 72 in the circumferential direction of the insertion portion 42 may be larger than a width of the convex portion 71 in the same direction. By making contact with the guide slope 82L or the guide slope 82R, the stopper portion 72 may restrict downward movement of the top member 40 relative to the base member 50.

Furthermore, as illustrated in FIG. 8, the outer surface on the lower side of the lower end portion 73 of the convex portion 71 of the engaging portion 70 may be a curved surface. The lower end portion 73 may be formed in a tapered shape such that the width of the column portion 52 in the circumferential direction gradually narrows toward the lower end. This may reduce resistance when the lower end portion 73 of the convex portion 71 moves along the guide slope 82L or the guide slope 82R, making it easier to insert the convex portion 71 inside the groove portion 81. Furthermore, the outer surface on the lower side of the lower end portion 73 of the convex portion 71 may be an inclined surface that faces in an oblique direction downward and in a direction facing the axis L1 of the insertion portion 42. This may also reduce resistance when the lower end portion 73 moves along the guide slope 82L or the guide slope 82R, making it easier to insert the convex portion 71 inside the groove portion 81.

One among the top member 40 and the base member 50 may have a magnet. Furthermore, the other among the top member 40 and the base member 50 may have a magnet or a magnetic body that adheres to the magnet. This may make it easier to attach the top member 40 to the base member 50. The user may attach the top member 40 to the base member 50 by, for example, releasing the top member 40 above the base member 50.

In the example illustrated in FIG. 3, the base member 50 has a magnet 91, and the top member 40 has a magnetic body 92 that adheres to the magnet 91. As illustrated in FIG. 9, a concave portion 55 that opens upward may be formed at the upper end portion of the column portion 52 of the base member 50. The magnet 91 may be secured to the concave portion 55. Furthermore, the insertion portion 42 of the top member 40 may be formed with the concave portion 43 that opens downward and into which the column portion 52 of the base member 50 is fitted, and the magnetic body 92 may be secured inside the concave portion 43. Not limited thereto, the top member 40 may have a magnet and the base member 50 may have a magnetic body. Furthermore, both the top member 40 and the base member 50 may have magnets that mutually adhere. This may also make it easier to attach the top member 40 to the base member 50.

As described above, the operation stick 22 (see FIG. 1) of the input device 1 may have, as illustrated in FIG. 2, the top member 40 having the upper surface 40U, which may be touched by a finger of the user, and the base member 50 to which the top member 40 is attached. The top member 40 may have the insertion portion 42 extending downward and inserted into the base member 50. As illustrated in FIG. 5, the insertion portion 42 may have the plurality of engaging portions 70 (for example, engaging portions 70N, 70S, 70E, and 70W) that surrounds the axis L1 of the insertion portion 42. Furthermore, as illustrated in FIG. 6, the base member 50 may have the plurality of engaging portions 80 (for example, engaging portions 80N, 80S, 80E, and 80W) that surrounds the axis L1 and engages with the plurality of engaging portions 70 of the insertion portion 42. Here, as illustrated in FIG. 4, the mark 45 that indicates the direction intersecting the axis L1 of the insertion portion 42 may be formed on the outer surface of the top member 40. This may make it easier to recognize the corresponding relationship between the tilt direction of the operation stick 22 and the instruction direction to the application from the external appearance of the input device 1.

### [3. Configuration of hardware and system]

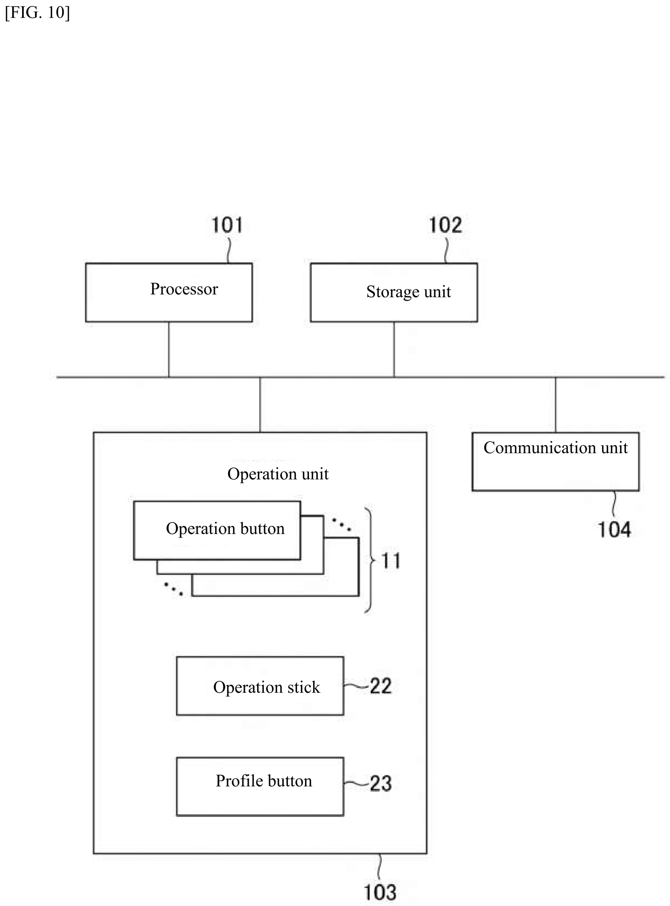

One example of the hardware installed in the input device 1 and the system will be described below. FIG. 10 is a diagram showing one example of a configuration of hardware installed in the input device 1. As shown in FIG. 10, the input device 1 may have a processor 101, a storage unit 102, an operation unit 103, and a communication unit 104. The processor 101 is a device that executes data processing, and is, for example, a CPU (central processing unit). The storage unit 102 is a memory element such as a ROM (read-only memory), a RAM (random access memory), an SSD (solid state drive), or an HDD (hard disk drive). The storage unit 102 may store data, such as a program executed by the processor 101, or the like. The operation unit 103 receives an operation input by the user and outputs a signal indicating operation content thereof to the processor 101. The operation unit 103 includes, for example, the operation button 11, the operation stick 22, and the profile button 23 mentioned above. The communication unit 104 is a communication interface that controls communication with an external device. The input device 1 may also include in addition thereto a data input/output terminal, such as a USB (universal serial bus) or the like, and an audio output terminal, such as a microphone, speaker, or the like.

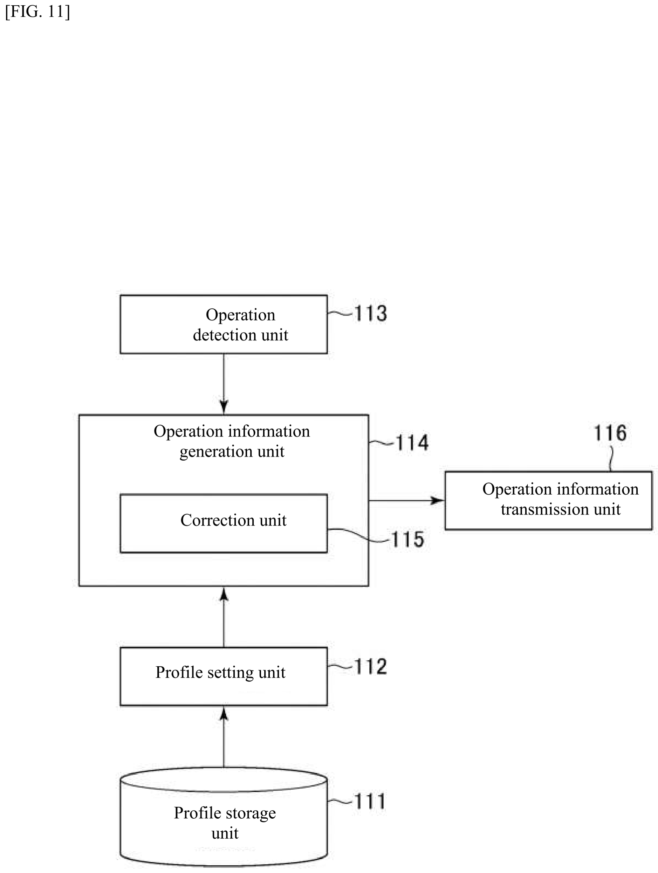

FIG. 11 is a functional block diagram showing one example of functions implemented by the input device 1 (input system). As shown in FIG. 11, the input device 1 may include, as functions, a profile storage unit 111, a profile setting unit 112, an operation detection unit 113, an operation information generation unit 114, a correction unit 115, and an operation information transmission unit 116. The profile storage unit 111 may be realized mainly by the storage unit 102. The profile setting unit 112, the operation detection unit 113, the operation information generation unit 114, the correction unit 115, and the operation information transmission unit 116 may be realized mainly by the processor 101.

The profile storage unit 111 stores profile information including information on the orientation of the input device 1. Profile information may include an ID or name of a profile, information on a function assigned to the operation button 11, such as an action, command, or the like, and information on the sensitivity of the operation stick 22. The "information on the orientation of the input device 1" is, for example, information indicating a positional relationship between the first unit 10 and the second unit 20 illustrated in FIG. 1. The profile storage unit 111 may store a plurality of pieces of profile information. The profile storage unit 111 may store profile information according to each of a plurality of users.

The profile setting unit 112 sets profile information based on an operation input by a user to the input device 1 or an instruction from an information processing device, such as a game device or the like, that communicates with the input device 1. The profile setting unit 112 changes, for example, the information on the orientation of the input device 1 included in the profile information. The profile setting unit 112 may change information on the function assigned to the operation button 11 or information on the sensitivity of the operation stick 22. When the profile storage unit 111 stores the plurality of pieces of profile information, the profile setting unit 112 may determine the profile information to be enabled on the input device 1 based on the operation input by the user to the input device 1. When the profile button 23 illustrated in FIG. 1 is operated by the user, the profile setting unit 112 may switch the profile information enabled by the input device 1 to other profile information stored in the profile storage unit 111.

The profile setting unit 112 may present the user with a plurality of options (for example, images) indicating the positional relationship between the first unit 10 and the second unit 20 illustrated in FIG. 1, and set the positional relationship of the option selected by the user. The profile setting unit 112 presents the user with, for example, an option indicating an orientation in which the second unit 20, on which the operation stick 22 is provided, is disposed on the left side of the first unit 10, which is the main body; an option indicating an orientation in which the second unit 20 is positioned on the right side of the first unit 10; an option indicating an orientation in which the second unit 20 is positioned forward of the first unit 10; and an option in which the second unit 20 is positioned backward of the first unit 10. The user selects from the four options the option that matches the orientation of the input device 1 during use. The profile setting unit 112 sets the orientation of the input device 1 indicated by the option selected by the user in the profile information.

The operation detection unit 113 detects an operation input by the user to the operation unit 103 using the operation button 11, the operation stick 22, or the like. The operation by the user includes, for example, an operation of tilting the operation stick 22. The operation detection unit 113 detects an analog value associated with an operation to the operation stick 22, performs analog-to-digital conversion thereon, and outputs the converted digital value to the operation information generation unit 114.

The operation information generation unit 114 generates user operation information to be transmitted to an information processing device, such as a game device or the like, based on the operation by the user detected by the operation detection unit 113 and the profile information stored in the profile storage unit 111 (the profile information enabled by the profile setting unit 112 when the profile storage unit 111 stores the plurality of pieces of profile information). The operation information transmission unit 116 transmits the operation information generated by the operation information generation unit 114 to the information processing device.

The correction unit 115 corrects the value based on the operation input to the operation stick 22 by the user on the basis of the profile information stored in the profile storage unit 111 (the profile information enabled by the profile setting unit 112 when the profile storage unit 111 stores the plurality of pieces of profile information). The correction unit 115 calculates the value to be output to the information processing device by, for example, correcting the value based on the operation input to the operation stick 22 by the user on the basis of the information on the orientation of the input device 1 included in the profile information (information indicating the positional relationship between the first unit 10 and the second unit 20).

The operation information generation unit 114 generates operation information indicating, for example, values from Xmin to Xmax (Xmin < Xmax) corresponding to the tilt of the operation stick 22 in the left-right direction, and values from Ymin to Ymax (Ymin < Ymax) corresponding to the tilt of the operation stick 22 in the front-rear direction. For example, when the profile information indicates that the second unit 20 on which the operation stick 22 is provided is set to have an orientation of being disposed on the left side of the first unit 10, the correction unit 115 does not correct the value generated in response to the tilt of the operation stick 22; when the profile information indicates that the second unit 20 is set to have an orientation of being disposed on the right side of the first unit 10, the correction unit 115 corrects the value (for example, Xa) generated in response to the tilt of the operation stick 22 in the left-right direction to a value (for example, - Xa) opposite to a value between Xmin and Xmax (for example, 0), and corrects the value (for example, Ya) generated in response to the tilt of the operation stick 22 in the front-rear direction to a value (for example, -Ya) opposite to a value between Ymin and Ymax (for example, 0). Furthermore, when the profile information indicates that the second unit 20 on which the operation stick 22 is provided is set to have an orientation of being disposed on the front side or rear side of the first unit 10, the correction unit 115 may correct a value (for example, Xa) generated in response to the tilt of the operation stick 22 in the left-right direction to a value (for example, Ya or -Ya) generated in response to the tilt of the operation stick 22 in the front-rear direction, and may correct a value (for example, Ya) generated in response to the tilt of the operation stick 22 in the front-rear direction to a value (for example, Xa or -Xa) generated in response to the tilt of the operation stick 22 in the left-right direction.

The input device 1 has the above functions, and thus the portion where the operation stick is disposed on the input device 1 may be disposed on the right-hand side or left-hand side, front side, or back side of the user. Here, as illustrated in FIG. 5, the insertion portion 42 of the top member 40 may have the plurality of engaging portions 70 (for example, engaging portions 70N, 70S, 70E, and 70W) surrounding the axis L1 of the insertion portion 42, and as illustrated in FIG. 6, the base member 50 may have the plurality of engaging portions 80 (for example, engaging portions 80N, 80S, 80E, and 80W) that surrounds the axis L1 and engages with the plurality of engaging portions 70 of the insertion portion 42. Moreover, as illustrated in FIG. 4, the mark 45 that indicates the direction intersecting the axis L1 may be formed on the outer surface of the top member 40. Thus, the corresponding relationship between the tilt direction of the operation stick 22 and the instruction direction to the application may be easily recognized from the external appearance of the input device 1.

### [4. Variations]

Note that the present invention is not limited to the embodiment described above. In the embodiment, an example is described in which the insertion portion 42 of the top member 40 has four engaging portions 70N, 70S, 70E, and 70W, as illustrated in FIG. 5, and the base member 50 has four engaging portions 80N, 80S, 80E, and 80W, as illustrated in FIG. 6. Not limited thereto, the number of engaging portions 70 formed on the insertion portion 42 may be a plurality of five or more. Similarly, the number of engaging portions 80 formed on the base member 50 may be a plurality of five or more. This may make it possible to attach the top member 40 to the base member 50 so that the mark 45 indicates a direction different to the four directions of front, back, left, and right with respect to the axis L1 of the operation stick 22.

Furthermore, the number of engaging portions 70 formed on the insertion portion 42 of the top member 40 may be a plurality of three or less or may be one. In this case, the engaging portion 70 of the top member 40 corresponds to one example of the "second engaging portion", and the engaging portion 80 of the base member 50 corresponds to one example of the "first engaging portion". Furthermore, in this case, the one or plurality of the engaging portion 70 engages with one or a plurality of the plurality of engaging portions 80 (for example, the four engaging portions 80N, 80S, 80E, and 80W) formed on the base member 50, making it possible for the mark 45 to indicate the direction intersecting the axis L1 of the operation stick 22 (for example, the four directions of front, back, left, and right). This may also make it easier to recognize the corresponding relationship between the tilt direction of the operation stick 22 and the instruction direction to the application from the external appearance of the input device 1.

Furthermore, the number of engaging portions 80 formed on the base member 50 may be a plurality of three or less or may be one. In this case, the engaging portion 70 of the top member 40 corresponds to one example of the "first engaging portion", and the engaging portion 80 of the base member 50 corresponds to one example of the "second engaging portion". Furthermore, in this case, one or a plurality of the engaging portions 80 engages with one or a plurality of the plurality of engaging portions 70 (for example, the four engaging portions 70N, 70S, 70E, and 70W) formed on the top member 40, making it possible for the mark 45 to indicate the direction intersecting the axis L1 of the operation stick 22 (for example, the four directions of front, back, left, and right). This may also make it easier to recognize the corresponding relationship between the tilt direction of the operation stick 22 and the instruction direction to the application from the external appearance of the input device 1.

Furthermore, in the embodiment, an example is described in which the engaging portion 70 of the top member 40 has the convex portion 71 protruding from the inner circumferential surface of the cylindrical insertion portion 42, as illustrated in FIG. 8, and the engaging portion 80 of the base member 50 includes the groove portion 81 formed on the outer circumferential surface of the column portion 52, as illustrated in FIG. 7 and FIG. 9. Not limited thereto, the engaging portion 70 of the top member 40 may include a groove portion formed on the inner circumferential surface of the insertion portion 42, and the engaging portion 80 of the base member 50 may include a convex portion protruding from the outer circumferential surface of the column portion 52. This may also make it possible to restrict movement of the insertion portion 42 of the top member 40 in the circumferential direction of the axis L1 while the top member 40 is attached to the base member 50.

Furthermore, when the engaging portion 70 of the top member 40 includes a groove portion extending along the insertion portion 42, the engaging portion 70 may have a guide slope for guiding the convex portion of the engaging portion 80 in this groove portion. For example, the engaging portion 70 may have a guide slope extending in an oblique direction downward from the left edge on the lower end portion of the groove portion and in the circumferential direction of the insertion portion (clockwise direction), and a guide slope extending in an oblique direction downward from the right edge on the lower end portion of the groove portion and in the circumferential direction of the insertion portion (anticlockwise direction). This may also make it easier to attach the top member 40 to the base member 50.

### [5. Summary]

(1) As described above, the input device described in the present disclosure may have an operation stick having a top member having an upper surface, which may be touched by a finger of a user, and a base member to which the top member is attached. The top member may have an insertion portion extending downward and inserted into the base member. One among the base member and the insertion portion may have a plurality of first engaging portions surrounding an axis of the insertion portion, and the other may have at least one second engaging portion that engages with at least one among the plurality of first engaging portions and restricts movement of the insertion portion in a circumferential direction of the axis. A mark that indicates a direction intersecting the axis may be formed on an outer surface of the top member. Accordingly, a corresponding relationship between a tilt direction of the operation stick and an instruction direction to an application may be easily recognized from the external appearance of the input device.
(2) In the input device according to (1), the plurality of first engaging portions may include a first engaging portion positioned in a first direction with respect to the axis, and a first engaging portion positioned in a second direction that is opposite to the first direction with respect to the axis.
(3) In the input device according to (2), the plurality of first engaging portions may further include a first engaging portion positioned in a third direction intersecting the second direction and the first direction with respect to the axis.
(4) In the input device according to any of (1) to (3), one among the plurality of first engaging portions and the at least one second engaging portion may include a convex portion extending along an extending direction of the insertion portion, and the other may include a groove portion extending along the extending direction of the insertion portion.
(5) In the input device according to (4), the other among the plurality of first engaging portions and the at least one second engaging portion may include a guide slope that is inclined in an oblique direction from an end portion of the groove portion and in a circumferential direction of the insertion portion and the extending direction of the insertion portion. This allows the top member to be easily attached to the base member.
(6) In the input device according to any of (1) to (5), one among the top member and the base member has a magnet, and the other has a magnet or a magnetic body that adheres to the magnet. This allows the top member to be easily attached to the base member.

## Claims

1. An input device, comprising:
an operation stick having a top member having an upper surface, which may be touched by a finger of a user, and a base member to which the top member is attached, wherein: the top member has an insertion portion extending downward and inserted into the base member; one among the base member and the insertion portion has a plurality of first engaging portions surrounding an axis of the insertion portion, and the other has at least one second engaging portion that engages with at least one of the plurality of first engaging portions and restricts movement of the insertion portion in a circumferential direction of the axis; and a mark that indicates a direction intersecting the axis is formed on an outer surface of the top member.

2. The input device according to claim 1, wherein:
the plurality of first engaging portions includes a first engaging portion positioned in a first direction with respect to the axis, and a first engaging portion positioned in a second direction that is opposite to the first direction with respect to the axis.

3. The input device according to claim 2, wherein:
the plurality of first engaging portions further includes a first engaging portion positioned in a third direction intersecting the second direction and the first direction with respect to the axis.

4. The input device according to claim 1, wherein:
one among the plurality of first engaging portions and the at least one second engaging portion includes a convex portion extending along an extending direction of the insertion portion, and the other includes a groove portion extending along the extending direction of the insertion portion.

5. The input device according to claim 4, wherein:
the other among the plurality of first engaging portions and the at least one second engaging portion includes a guide slope that is inclined in an oblique direction from an end portion of the groove portion relative to a circumferential direction of the insertion portion and the extending direction of the insertion portion.

6. The input device according to claim 1, wherein:
one among the top member and the base member has a magnet, and the other has a magnet or a magnetic body that adheres to the magnet.
